(19) Europäisches Patentamt
European Patent Office
Office européen des brevets

(11) **EP 3 898 362 B1**

(12) **EUROPÄISCHE PATENTSCHRIFT**

(45) Veröffentlichungstag und Bekanntmachung des Hinweises auf die Patenterteilung:
**18.12.2024 Patentblatt 2024/51**

(21) Anmeldenummer: **19832619.1**

(22) Anmeldetag: **17.12.2019**

(51) Internationale Patentklassifikation (IPC):
*B60T 13/66* (2006.01)    *B60T 8/171* (2006.01)
*B60T 8/172* (2006.01)    *B60T 13/74* (2006.01)
*B60T 17/22* (2006.01)

(52) Gemeinsame Patentklassifikation (CPC):
**B60T 13/662; B60T 8/171; B60T 8/172; B60T 13/741; B60T 17/221;** B60T 2270/604; B60T 2270/86

(86) Internationale Anmeldenummer:
**PCT/EP2019/085572**

(87) Internationale Veröffentlichungsnummer:
**WO 2020/127210 (25.06.2020 Gazette 2020/26)**

(54) **BREMSENANLAGE**

BRAKE SYSTEM

SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2018 AT 511222018**

(43) Veröffentlichungstag der Anmeldung:
**27.10.2021 Patentblatt 2021/43**

(73) Patentinhaber: **Schwarz, Severin**
**1190 Wien (AT)**

(72) Erfinder: **PUTZ, Michael**
**8272 Sebersdorf (AT)**

(74) Vertreter: **Gibler & Poth Patentanwälte KG**
**Dorotheergasse 7/14**
**1010 Wien (AT)**

(56) Entgegenhaltungen:
EP-A2- 1 384 638      US-A1- 2005 077 783
US-A1- 2007 194 623   US-A1- 2009 187 320
US-A1- 2009 195 058   US-A1- 2010 131 166
US-A1- 2014 025 271

**Beschreibung**

Die Erfindung betrifft eine Bremsenanlage gemäß dem Oberbegriff des Patentanspruches 1.

Es hat sich gezeigt, dass die Betätigung einer Bremse, bei welcher mit einem bestimmten Bremsmoment bzw. einer anderweitig vorgegebenen Bremswirkung auch tatsächlich gebremst werden soll, in der Praxis mit zahlreichen Problemen verbunden ist, weshalb es bisher nur mit sehr hohem Aufwand möglich war, eine Bremsenanlage, insbesondere eine elektromechanische Bremsenanlage, sicher und vorgebbar zu betreiben.

Die für die Steuerung einer solchen Bremsenanlage an sich interessanteste bzw. relevanteste Größe ist die Bremskraft bzw. ein Bremsmoment, sei es zwischen Reifen und Straße bzw. zwischen Bremsscheibe und Reibfläche. Für die Steuerung einer solchen Bremsenanlage wäre es an sich wünschenswert, wenn die jeweils vorherrschenden Werte für die auftretende Bremskraft bzw. das Bremsmoment einer Steuer- und Kontrolleinheit der betreffenden Bremsenanlage bekannt sind. Allerdings ist eine tatsächlich bei einem Bremsvorgang auftretende Bremskraft bzw. ein Bremsmoment in der Realität selbst unter Forschungs- bzw. Entwicklungsbedingungen nur mit erheblichem Aufwand messbar. Die Messung von Bremskraft bzw. Bremsmoment ist jedoch in der Praxis nicht mit vertretbarem Aufwand möglich. Neben dem Umstand, dass die Messung dieser Kraft bzw. dieses Moments an sich bereits unter Forschungs- bzw. Entwicklungsbedingungen sehr aufwendig ist, kommt erschwerend hinzu, dass es sich bei der Bremsenanlage eines Fahrzeuges um eine sicherheitskritische Anlage handelt, an deren Funktion sowie Ausfallssicherheit besondere Anforderungen gestellt werden. Eine entsprechende Messanlage müsste nicht nur über eine hohe Genauigkeit verfügen, sondern zudem mehrfach redundant ausgebildet sein. Die Steuerung einer realen Bremsenanlage eines Massenprodukts für nicht speziell geschulte Endverbraucher ist daher nicht mittels Messung der auftretenden Bremskräfte bzw. Bremsmomente möglich.

Das Bremsmoment ist - bei bekannten Reibbeiwerten und Abmessungen des beteiligten Bremsbelages und der Bremsscheibe - direkt proportional der Anpresskraft des wenigstens einen Bremsbelages auf die Bremsscheibe. Allerdings sind in der Praxis weder die Reibbeiwerte noch die Anpresskraft in ausreichender Genauigkeit bekannt.

Aus der US 2009/187320 A1 ist ein Bremssystem bekannt, bei dem ein konventionelles hydraulisches Bremssystem mit einem System zum regenerativen Bremsen vereint wird.

Die US 2010/131166 A1 zeigt ein Bremssystem, wobei ein reguläres Bremssystem mit einem regenerativen Bremssystems eines Elektrofahrzeuges kombiniert wird.

In der US 2014/025271 A1 ist ein System gezeigt bei dem anhand einer gemessenen Temperatur der Bremse, sowie einer gemessenen Feuchtigkeit, eine angenommene Änderung des Reibungsbeiwerts kompensiert wird.

Aus der US 2009/195058 A1, der US 2007/194623 A1, der US 2005/077783 A1 und der EP 1 384 638 A2 sind elektromechanische Parkbremsen, sowie weitere Bremssysteme bekannt.

An sich könnte die Anpresskraft mittels eines Kraftsensors, insbesondere eines sog. Normalkraftsensors bzw. eines Normalkraftmesssystems, direkt ermittelt werden, und in eine entsprechende Steuerung einfließen. Allerdings wären auch von einem Kraftmesssystem die sehr hohen Anforderungen hinsichtlich Genauigkeit, Ausfallssicherheit und Redundanz zu erfüllen.

Das Bremsmoment kann, bei einer elektromechanischen Bremse, ohne Verwendung eines Kraftmesssystems bereits über die Stromaufnahme des Elektromotors, welcher als Antrieb für die Mechanik der Bremsanlage dient, welche den wenigstens einen Bremsbelag gegen die Bremsscheibe drückt, abgeschätzt werden. Allerdings hat sich gezeigt, dass dies in der Praxis zu ungenau ist, um die Betätigung einer Bremse lediglich über deren Stromaufnahme zu steuern bzw. zu regeln. Der betreffende Elektromotor wirkt nicht direkt bzw. unmittelbar auf den Bremsbelag, sondern treibt ein mechanisches System an, dessen Eigenschaften ständigen Änderungen unterworfen sind. Es liegt in der Natur eines Fahrzeuges, dass dieses innerhalb kurzer Zeit von einem Ort an einen anderen Ort gelangt. Dabei ändern sich sowohl die Umgebungsbedingungen, wie auch die Bedingungen an dem Fahrzeug selbst, etwa durch Veränderungen der Temperatur, der Feuchtigkeit, des Umfanges und der detaillierten Zusammensetzung der Schmierstoffe in der Bremsanlage, sowie durch Verschmutzung. Aufgrund dieser ständigen Änderungen ist eine Regelung, welche ausschließlich auf Basis der Stromaufnahme des Elektromotors basiert, in der Praxis nicht möglich.

Aufgabe der Erfindung ist es daher eine Bremsenanlage der eingangs genannten Art anzugeben, mit welcher die genannten Nachteile vermieden werden können, und bei welcher eine möglichst genaue Einstellung einer vorgebbaren Bremswirkung mit geringem messtechnischem Aufwand möglich ist.

Erfindungsgemäß wird dies durch die Merkmale des Patentanspruches 1 erreicht.

Dadurch kann eine vorgegebene Bremswirkung mit geringem messtechnischem Aufwand sehr genau eingestellt und kontrolliert werden.

Dadurch ist eine Ermittlung der jeweils vorherrschenden bzw. auftretenden Bremskräfte bzw. Bremsmomente durch Messung nicht mehr erforderlich. Stattdessen wird die Temperatur im Bereich der Bremse ermittelt. Anstatt aus dieser Temperatur eine Bremskraft bzw. ein Bremsmoment zu ermitteln, wird aufgrund der Vorgabe der Bremswirkung die Temperatur bzw. der Erwärmungsverlauf der Bremse ermittelt. Da genau bekannt ist, an welchem Ort sich die einzelnen Teile der Bremse befinden, und auch die thermischen Eigenschaften der einzelnen Teile der Bremse bekannt sind, ebenso wie Ort und Charakteristik des wenigstens einen Temperatursensors, kann sehr genau vorausberechnet werden, zufolge welchen Verlaufs die Temperatur der Bremse ansteigen sollte, wenn diese tatsächlich in der erwarteten Stärke bremst. Ausgehend von diesem Erwartungswert kann dann ein aktueller Bremsvorgang nachgeführt werden.

Dadurch können Abweichungen von einer Bremszielkraft bzw. einem Bremszielmoment - auch während des Bremsvorganges selbst - schnell und zuverlässig erkannt und ausgeregelt werden. Dadurch ist eine zielgenaue Steuerung bzw. Regelung einer Bremsenanlage bzw. eines Bremsvorganges möglich.

Durch das mittelbare Feststellen der Bremsreibkraft über deren Wirkungen kann diese sehr einfach und mit geringem Aufwand ermittelt werden. Neben dem verwendeten Temperatursensor können noch weitere Sensoren herangezogen werden, welche ohnedies bereits Teil eines, mit der Bremsenanlage ausgestatteten Fahrzeuges sind, wie beispielsweise jeweils wenigstens ein Beschleunigungssensor und/oder Geschwindigkeitssensor und/oder Neigungsmesser. Dabei kann die Genauigkeit der ermittelten Bremsreibkraft durch eine Verknüpfung der ermittelten Wirkungen noch erhöht werden.

Durch den Vergleich einer erwarteten Bremswirkung mit einer tatsächlichen Bremswirkung und der Berücksichtigung einer entsprechenden Abweichung bei der weiteren Steuerung bzw. Regelung der Bremsenanlage werden - innerhalb gewisser systembedingter Grenzen - auch sämtliche Ursachen einer solchen Abweichung berücksichtigt. Dadurch werden auch Elastizitäten bzw. Verformungen einzelner Teile der Bremsenanlage kompensiert, ohne diese genau kenne zu müssen.

Weiters werden dadurch auch Haft/Gleitreibungsübergänge mit berücksichtigt. Erfolgt eine Veränderung der Bremswirkungsanforderung, so wird das veränderte Bremssteuersignal von der Steuer- und Kontrolleinheit so lange nachjustiert bzw. mittels des wenigstens einen Korrekturfaktors angepasst, bis eine entsprechende Veränderung auch über die Steuer- und Kontrolleinheit detektiert wird. Selbstverständlich kann dabei auch eine Hysterese und/oder ein nicht-lineares Übersetzungsverhältnis der beteiligten, insbesondere mechanischen, Komponenten bereits bei der Bildung des Bremssteuersignals durch die Steuer- und Kontrolleinheit berücksichtigt werden.

Dadurch können Veränderungen der Bremsenanlage, welche etwa zwischen einer Außerbetriebnahme der Bremsenanlage und deren erneuter Inbetriebnahme und/oder im laufenden Betrieb erfolgt ist, sicher erkannt und berücksichtigt werden. Dadurch ist es möglich, ausgehend von einer Vorgabe einer Bremswirkung, die Bremse derart anzusteuern, dass diese Bremswirkung auch tatsächlich erreicht wird, und zwar ohne dass hierfür ein aufwendiges und fehleranfälliges Kraftmesssystem erforderlich wäre. Allerdings kann durchaus ein einfaches, kostengünstiges bzw. nicht sicherheitsrelevantes Kraftmesssystem Teil der Bremsenanlage sein.

Die gegenständliche Bremsenanlage weist einen einfachen Aufbau auf, und ist sehr betriebssicher, da sehr robuste und entsprechend ausfallssichere Sensoren verwendet werden können.

Besonders bevorzugt betrifft die gegenständliche Erfindung weiters ein Fahrzeug mit einer gegenständlichen Bremsenanlage gemäß Patentanspruch 12, wobei die Bremsenanlage wenigstens zwei Bremsen umfasst. Bei dieser Ausführung werden beide Bremsen auf denselben Zielwert hin geregelt. Dadurch können unbeabsichtigter Weise unterschiedlich bremsende Räder an beiden Fahrzeugseiten verhindert werden. Dadurch kann auch verhindert werden, dass sich zwar identische Verhältnisse bei beiden Bremsen einstellen, welche jedoch wiederum unterschiedlich sind, als die Zielvorgabe. Dadurch kann ein gegenseitiges Aufschaukeln bzw. Fehlabgleiche verhindert werden.

Die Erfindung betrifft weiters ein Verfahren zum Betreiben einer Bremsanlage gemäß dem Oberbegriff des Patentanspruches 15.

Aufgabe der Erfindung ist es daher ein Verfahren der vorstehend genannten Art anzugeben, mit welchem die genannten Nachteile vermieden werden können, und bei welchem eine möglichst genaue Einstellung einer vorgebbaren Bremswirkung mit geringem messtechnischem Aufwand möglich ist.

Erfindungsgemäß wird dies durch die Merkmale des Patentanspruches 15 erreicht.

Dadurch können die vorstehend zur Bremsenanlage geltend gemachten Vorteile erzielt werden.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:

Fig. 1 ein Blockschaltbild einer ersten Ausführungsform einer gegenständlichen Bremsenanlage; und
Fig. 2 ein Blockschaltbild eines Teiles einer zweiten Ausführungsform einer gegenständlichen Bremsenanlage.

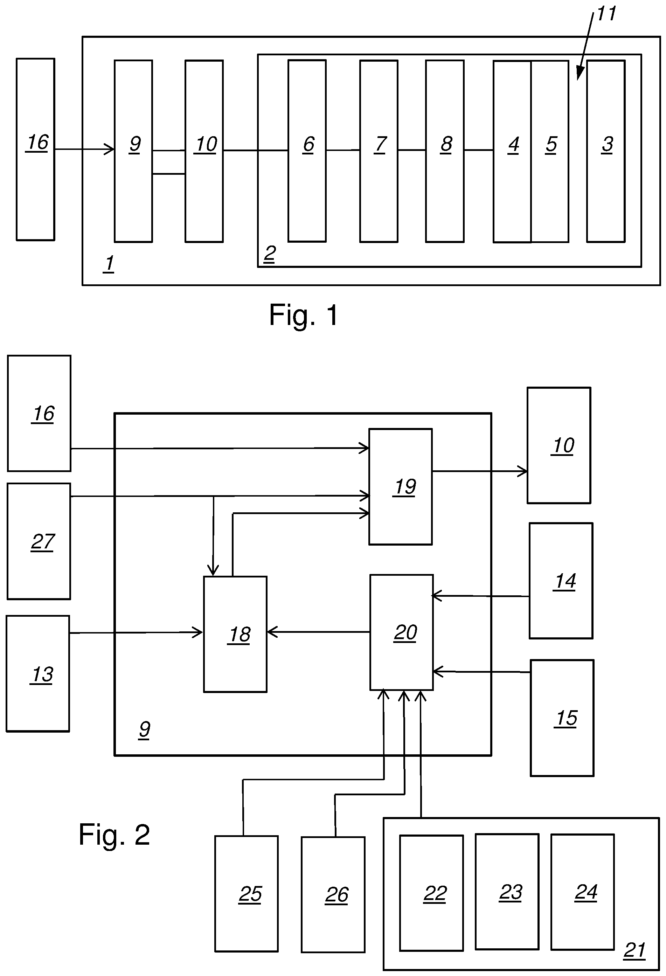

Die Fig. 1 zeigt ein Blockschaltbild einer bevorzugten Ausführungsform einer Bremsenanlage 1 umfassend wenigstens eine elektromechanische Bremse 2, wobei die elektromechanische Bremse 2

- wenigstens eine Reibfläche 3,

- wenigstens einen Belagsträger 4 mit wenigstens einem Bremsbelag 5,
- wenigstens einen Elektromotor 6 zum vorgebbaren Bewegen des Belagsträgers 4,
- eine Betätigungsmechanik 7, an welcher der Belagsträger 4 gelagert ist, und welche mit dem Elektromotor 6 verbunden ist, und
- vorzugsweise wenigstens eine, mit der Betätigungsmechanik 7 verbundene, mechanische Nachstellvorrichtung 8,

aufweist, wobei die Bremsenanlage 1 eine Steuer- und Kontrolleinheit 9 aufweist, welche dazu ausgebildet ist eingangsseitig eine Bremswirkungsanforderung zu empfangen, und auf Basis der Bremswirkungsanforderung ein Bremssteuersignal zu generieren und an einen Regler 10 der Bremse 2 auszugeben, wobei die Bremsenanlage 1 wenigstens einen Bremsentemperatursensor 15 umfasst, welcher vorzugsweise an dem wenigstens einen Belagsträger 4 und/oder der Reibfläche 3 und/oder dem Bremsbalg 5 und/oder der Betätigungsmechanik, sowie vorzugsweise der Nachstellvorrichtung 8, angeordnet ist, welcher Bremsentemperatursensor 15 mit der Steuer- und Kontrolleinheit 9 nachrichtentechnisch verbunden ist, und dass die Steuer- und Kontrolleinheit 9 dazu ausgebildet ist, aufgrund der Bremswirkungsanforderung eine zeitliche Folge von Bremsentemperaturerwartungswerten zu ermitteln, und weiters eine vom Bremsentemperatursensor 15 ermittelte Temperatur mit einem zeitlich korrespondierenden Wert der Bremsentemperaturerwartungswerte zu vergleichen, und aufgrund einer vorgebbaren Abweichung der ermittelten Temperatur von dem korrespondierenden Wert der Bremsentemperaturerwartungswerte wenigstens einen Korrekturfaktor zu ermitteln, weiters das Bremssteuersignal um den wenigstens einen Korrekturfaktor zu korrigieren, und den Regler 10 mit dem korrigierten Bremssteuersignal anzusteuern.

Gegenständlich wird als erfindungsgemäße Ausführungsform der Bremsenanlage 1 eine elektromechanische Bremsenanlage beschrieben.

Dadurch kann eine vorgegebene Bremswirkung mit geringem messtechnischem Aufwand sehr genau eingestellt werden.

Dadurch ist eine Ermittlung der jeweils vorherrschenden bzw. auftretenden Bremskräfte bzw. Bremsmomente durch Messung nicht mehr erforderlich. Stattdessen wird die Temperatur im Bereich der Bremse 2 ermittelt. Anstatt aus dieser Temperatur eine Bremskraft bzw. ein Bremsmoment zu ermitteln, wird aufgrund der Vorgabe der Bremswirkung die Temperatur bzw. der Erwärmungsverlauf der Bremse 2 ermittelt. Da genau bekannt ist, an welchem Ort sich die einzelnen Teile der Bremse 2 befinden, und auch die thermischen Eigenschaften der einzelnen Teile der Bremse 2 bekannt sind, ebenso wie Ort und Charakteristik des wenigstens einen Bremstemperatursensors 15, kann sehr genau vorausberechnet werden, zufolge welchen Verlaufs die Temperatur der Bremse 2 ansteigen sollte, wenn diese tatsächlich in der erwarteten Stärke bremst. Ausgehend von diesem Erwartungswert kann dann ein aktueller Bremsvorgang nachgeführt werden.

Dabei kann die Erwärmung der Reibfläche 3 aufgrund des Wärmewiderstandes und der Wärmekapazität als Tiefpass angenommen bzw. dargestellt werden, an dessen Ausgang ein weiterer Tiefpass zur Messstelle, daher zu dem Ort, an dem sich der Bremsentemperatursensor 15 befindet, angeordnet ist. Dabei wird für die Wärmewiderstände insbesondere angenommen, dass diese einem schwarzen Körper entsprechen. Vorzugsweise berücksichtigen die Wärmewiderstände weiters Fahrtwindkühlung und/oder raddrehzahlabhängige Kühlung (Innenbelüftung). Weiters umfassen die Wärmewiderstände wenigstens einen unabhängigen, immer wirksamen Teil der Wärmeabfuhr. Es müssen nicht sämtliche der gegenständlich angeführten Teile tatsächlich Eingang in die jeweils zur Ermittlung der Erwartungswerte verwendeten Modelle bzw. Berechnungen finden.

Dadurch können Abweichungen von einer Bremszielkraft bzw. einem Bremszielmoment - auch während des Bremsvorganges selbst - schnell und zuverlässig erkannt und ausgeregelt werden. Dadurch ist eine zielgenaue Steuerung bzw. Regelung einer Bremsenanlage 1 bzw. eines Bremsvorganges möglich.

Durch das mittelbare Feststellen der Bremsreibkraft über deren Wirkungen kann diese sehr einfach und mit geringem Aufwand ermittelt werden. Neben dem verwendeten Bremsentemperatursensor 15 können noch weitere Sensoren herangezogen werden, welche ohnedies bereits Teil eines, mit der Bremsenanlage 1 ausgestatteten Fahrzeuges sind, wie beispielsweise jeweils wenigstens ein Beschleunigungssensor und/oder Geschwindigkeitssensor und/oder Neigungsmesser. Dabei kann die Genauigkeit der ermittelten Bremsreibkraft durch eine Verknüpfung der ermittelten Wirkungen noch erhöht werden.

Durch den Vergleich einer erwarteten Bremswirkung mit einer tatsächlichen Bremswirkung und der Berücksichtigung einer entsprechenden Abweichung bei der weiteren Steuerung bzw. Regelung der Bremsenanlage 1 werden - innerhalb gewisser systembedingter Grenzen - auch sämtliche Ursachen einer solchen Abweichung berücksichtigt. Dadurch werden auch Elastizitäten bzw. Verformungen einzelner Teile der Bremsenanlage 1 kompensiert, ohne diese genau kenne zu müssen.

Weiters werden dadurch auch Haft/Gleitreibungsübergänge mit berücksichtigt. Erfolgt eine Veränderung der Bremswirkungsanforderung, so wird das veränderte Bremssteuersignal von der Steuer- und Kontrolleinheit 9 so lange nachjustiert bzw. mittels des wenigstens einen Korrekturfaktors angepasst, bis eine entsprechende Veränderung auch über die Steuer- und Kontrolleinheit 9 detektiert wird. Selbstverständlich kann dabei auch eine Hysterese und/oder ein nicht-lineares Übersetzungsverhältnis der beteiligten mechanischen, Komponenten bereits bei der Bildung des Bremssteuersignals durch die Steuer- und Kontrolleinheit 9 berücksichtigt werden. Bei einem entsprechenden nicht-lineares Übersetzungsverhältnis ist bevorzugt vorgesehen, dass ein solches derart ausgebildet ist, dass der Bremsbelag 5 zur Überbrückung eines Luftspaltes bis zur Reibfläche 3 mit höherer Geschwindigkeit bewegt wird, als wenn dieser bereits im Rahmens eines Bremsvorganges in Anlage mit der Reibfläche 3 ist. Das gegenständliche Verfahren ist insbesondere bei einem derartigen nicht-linearen Übersetzungsverhältnis vorteilhaft, da dabei ein falsch eingestellter Luftspalt größere Auswirkungen hat, als dies bei linear übersetzten Bremsen 2 der Fall wäre. Dadurch können Veränderungen der Bremsenanlage 1, welche etwa zwischen einer Außerbetriebnahme der Bremsenanlage 1 und deren erneuter Inbetriebnahme und/oder im laufenden Betrieb erfolgt ist, sicher erkannt und berücksichtigt werden. Dadurch ist es möglich, ausgehend von einer Vorgabe einer Bremswirkung, die Bremse 2 derart anzusteuern, dass diese Bremswirkung auch tatsächlich erreicht wird, und zwar ohne dass hierfür ein aufwendiges und fehleranfälliges Kraftmesssystem erforderlich wäre. Die gegenständliche elektromechanische Bremsenanlage 1 weist einen einfachen Aufbau auf, und ist sehr betriebssicher, da sehr robuste und entsprechend ausfallssichere Sensoren verwendet werden können.

Die gegenständliche Erfindung betrifft eine elektromechanische Bremsenanlage 1, welche wenigstens die eigentliche elektromechanische Bremse 2 und eine zu deren Betrieb erforderliche Steuer- und Kontrolleinheit 9 sowie einen Bremsentemperatursensor 15 umfasst. Der Teil der Steuer- und Kontrolleinheit 9 zur Verarbeitung der Daten des Bremsentemperatursensor 15 kann auch als Bremsreibkraftwirkungssensoreinheit 20 bezeichnet sein.

Die gegenständliche elektromechanische Bremsenanlage 1 ist dazu vorgesehen eine Relativbewegung zwischen zwei Teilen zu bremsen. Insbesondere ist die gegenständliche Bremsenanlage 1 dazu vorgesehen, wenigstens einen rotierenden Bauteil zu bremsen. Dabei kann es sich an sich um jede Art eines rotierenden Bauteils handeln, wobei die Bremse 2 auch zum Bremsen von linearen Bewegungen vorgesehen sein kann. Als solche kann die gegenständliche Bremsenanlage 1 beispielsweise Teil einer Rolltreppe, eines Aufzuges oder eines Windrades sein. Insbesondere ist die Bremsanlage 1 dazu vorgesehen, in ein, insbesondere ein- oder mehrspuriges, Fahrzeug eingebaut zu werden, bzw. ein Teil eines Fahrzeuges zu sein. Dabei kann es sich um jede Art eines Rad- oder Kettenfahrzeuges handeln. Insbesondere handelt es sich bei dem Fahrzeug um wenigstens ein Fahrzeug ausgewählt aus der Gruppe: Automobil, Flugzeug, Motorrad, KFZ-Anhänger, Traktor, Schienenfahrzeug. Die Bremsenanlage 1 kann dabei beispielsweise zum Bremsen von Antriebsrädern vorgesehen sein, bzw. auch zum Bremsen anderer beweglicher Teile einer Vorrichtung bzw. eines Fahrzeuges.

Beispielsweise kann der Einsatz als Bremse einer Seiltrommel eines Krans vorgesehen sein.

Eine elektromechanische Bremse 2 kann im gegenständlichen Kontext jede Art einer Bremse 2 sein, bei der die Betätigung der Bremse 2, daher die Bewegung des Bremsbelags 5 in Richtung der Reibfläche 3 beim Bremsen bzw. das Lösen der Bremse 2, durch den Antrieb mittels eines Elektromotors 6 erfolgt. Dabei ist vorgesehen, dass die direkt vom Elektromotor 6 erzeugte Bewegung mittels einer Mechanik, der sog. Betätigungsmechanik 7, umgelenkt wird. Eine Bremse 2, bei welcher die eigentliche Betätigung mittels Hydraulik oder Pneumatik erfolgt, wird nicht als elektromechanische Bremse 2 angesehen, auch wenn dabei der Betriebsdruck des verwendeten Fluids mit einer elektrisch angetriebenen Pumpe erzeugt wird, und/oder wenn elektrisch betätigte Ventile verwendet werden.

Die Begriffe Steuern und Regeln werden gegenständliche gleichwertig verwendet.

Bei dem Elektromotor 6 kann es sich um jede Form eines Elektromotors 6 handeln, etwa um einen Linearmotor, eine Rotationsmaschine, einen DC-Motor oder einen AC-Motor usw. Bevorzugt ist vorgesehen, dass der Elektromotor 6 als Rotationsmaschine ausgebildet ist. Besonders bevorzugt ist weiters vorgesehen, dass der Elektromotor 6 als bürstenloser Gleichstrommotor ausgebildet ist. Ein derartiger Elektromotor 6 wird im Englischen auch als BLDC-Motor bezeichnet, wobei BLDC - in an sich bekannter Weise - für Brushless Direct Current steht.

Die elektromechanische Bremsenanlage 1 weist wenigstens einen Regler 10 auf, um den Elektromotor 6 anzusteuern bzw. eine entsprechende Regelung des Elektromotors 6 zu ermöglichen. Der Regler 10 bzw. die Regeleinheit ist elektrisch mit dem Elektromotor 6 verbunden, und beispielsweise umfassend einer Inverterschaltung oder Brückenschaltung ausgebildet. Der Regler 10 kann als jeder beliebige Regler sowie zufolge jeglichen beliebigen Verfahrens ausgebildet sein, sofern der Regler dazu ausgebildet bzw. in der Lage ist zu regeln, und zwar insbesondere eine Position und/oder ein Moment. Der Regler 10 muss selbstverständlich technisch dazu in der Lage sein, den jeweils ausgewählten Elektromotor 6 zu regeln.

Bei der gegenständlich bevorzugten Ausführung des Elektromotors 6 als BLDC-Motor ist bevorzugt vorgesehen, dass der Regler 10 als speziell für BLDC-Motoren ausgebildeter bzw. vorgesehener Regler 10 ausgebildet ist. Solche Regler 10, welche eine Positions-, Moment- und Drehzahlregelung umfassen, sind in dem betreffenden technischen Gebiet der Regelung von BLDC-Motoren bekannt. Insbesondere ist gegenständlich vorgesehen, dass ein derartiger Regler 10 Position, Momentbegrenzung und Drehzahlbegrenzung gleichzeitig an die Steuer- und Kontrolleinheit 9 übergeben.

Weiters kann dabei vorgesehen sein, dass der Regler 10 als Vektorregler ausgebildet ist. Ein Vektorregler wird im Englischen auch als FOC: Field Oriented Control bezeichnet.

Weiters kann auch ein Regler 10 umfassend wenigstens einen PID-Regler ausgebildet sein.

Selbstverständlich kann eine Bremse 2 auch mehr als nur einen Elektromotor 6 aufweisen. Bevorzugt kann vorgesehen sein, dass die Bremse 2 weiters einen, in den Figuren nicht dargestellten, zweiten Elektromotor aufweist, welcher zweite Elektromotor derart ausgebildet sei kann bzw. ein entsprechend selbsthemmendes Getriebe, etwa einen Spindeltrieb oder ein Schneckenrad, aufweisen kann, dass dieser ein vorgebbares Moment auch bei Stromlosigkeit halten kann. Dadurch kann einfach eine Parkbremsen-Funktion erreicht werden. Der zweite Elektromotor kann zufolge sämtlicher Ausführungsformen bzw. Verfahren, wie diese zum Elektromotor 6 beschrieben sind, betrieben werden. Dabei ist insbesondere vorgesehen, dass die jeweils zu einem der beiden Elektromotoren ermittelten Korrektorfaktoren auch beim Betrieb des anderen der beiden Elektromotoren berücksichtigt werden. Insbesondere kann dadurch, bei der Verwendung des optionalen zweiten Elektromotors zur Umsetzung einer Parkfunktion, gewährleistet werden, dass der Bremsbelag 5 mit ausreichender, aber nicht zu hoher Kraft auf die Reibfläche 3 gedrückt wird.

In diesem Zusammenhang kann weiters vorgesehen sein, einen derartig ausgebildeten zweiten Elektromotor bei einem betriebsgemäßen Bremsvorgang derart anzusteuern, dass dieser einen Teil der Bewegung des Belagsträgers 5 verursacht, etwa in Form einer Grobeinstellung der Position des Belagsträger 5, und dass der erste Elektromotor 6 die Feineinstellung des Belagsträgers vornimmt.

Selbstverständlich kann der zweite Elektromotor auch lediglich aus Redundanzgründen vorgesehen sein, um die Funktion der Bremsenanlage 1 auch bei Ausfall des Elektromotors 6 zu gewährleisten.

Die elektromechanische Bremse 2 weist wenigstens eine Reibfläche 3 sowie wenigstens einen Bremsbelag 5 zum Zusammenwirken mit der Reibfläche 3 auf. Die Reibfläche 3 kann insbesondere als Bremsscheibe einer Scheibenbremse oder als Bremstrommelfläche bei einer Trommelbremse ausgebildet sein. Weiters kann die Reibfläche 3 in Form einer Schiene ausgebildet sein, etwa wenn eine lineare Bewegung gebremst wird.

Der wenigstens eine Bremsbelag 5 ist auf wenigstens einem Belagsträger 4 befestigt. Bevorzugt sind je Reibfläche 3 mehrere Bremsbeläge 5 je Bremse 2 vorgesehen.

Der wenigstens eine Elektromotor 6 ist mittels einer Betätigungsmechanik 7 mit dem Belagsträger 4 verbunden, um diesen zu bewegen, bzw. ist der Belagsträger 6 an der Betätigungsmechanik 7 gelagert. Beispielsweise kann die Betätigungsmechanik 7 als Teil einer Keilbremse oder einer Kugelspindelbremse oder einer Kugelrampenbremse ausgebildet sein. Weiters kann die Betätigungsmechanik 7 Nocken bzw. Exzenter, jeweils mit vorgebbaren Erhebungskurven, aufweisen. Die gegenständliche Erfindung kann jedoch unabhängig von einer speziellen Ausgestaltung der Betätigungsmechanik 7 umgesetzt werden.

Gemäß einer bevorzugten Weiterbildung der gegenständlichen Erfindung ist weiters vorgesehen, dass die Betätigungsmechanik 7 ein nicht lineares Übersetzungsverhältnis aufweist. Dies ist derart zu verstehen, dass die Betätigungsmechanik 7 einen mechanischen Eingang aufweist, welcher mit dem Elektromotor 6 verbunden ist, dass die Betätigungsmechanik 7 einen mechanischen Ausgang aufweist, welcher mit dem Belagsträger 4 verbunden ist, und dass die Betätigungsmechanik 7 derart ausgebildet ist, dass eine Bewegung am Eingang über einen vorgebbar nicht linearen Zusammenhang mit einer Bewegung des Ausgangs zusammenhängt. Mit anderen Worten: eine bestimmte eingangsseitige Verstellung, daher eine mechanische Eingangsgröße, wird nicht mittels eines linearen Zusammenhangs sondern mittels eines nicht linearen Zusammenhanges, auf eine Verstellung bzw. Bewegung des Belagsträgers 4 abgebildet. Insbesondere ist eine solche nicht-lineare Betätigungsmechanik 7 derart ausgebildet, dass ein Spalt 11 zwischen einer Ruheposition des Bremsbelags 5 und der Reibfläche 3 sehr schnell bzw. mit nur geringer Bewegung des Elektromotors 6 zurückgelegt werden kann. Insbesondere ist vorgesehen, dass der Elektromotor 6 in einem optimalen Bereich betrieben wird, bei dem auch eine sichere Bremsbetätigung über Toleranzen möglich ist. Weiters ist dabei bevorzugt vorgesehen, dass der Elektromotor 6 im Bereich einer Kontaktposition des Bremsbelags 5 an der Reibfläche 3 derart betrieben wird, dass der Elektromotor 6 in einem Bereich betrieben wird, in welchem dieser sein höchstes abzugebendes Drehmoment aufweist.

Ein derartiger nicht linearer Zusammenhang kann beispielsweise mittels wenigstens einer Nocke erreicht werden, welche entsprechend geformt ist. Eine entsprechende Nicht-Linearität ist, bevorzugt in Form einer Übertragungsfunktion bzw. einer Übertragungsmenge, in einer Speichereinheit 13 der Bremsenanlage 1 abgelegt, und steht der Steuer- und Kontrolleinheit 9 zur Verfügung.

Um den Spalt 11 schnell zu überbrücken kann weiters vorgesehen sein, den Elektromotor 6 gegebenenfalls mittel sog. Feldschwächung mit einer erhöhten Drehzahl zu betreiben.

Die Vorteile der mechanisch erreichten Nichtlinearität können verfahrensgemäß somit durch Ausnutzung solcher Möglichkeiten des Elektromotors 6 ergänzt werden, also dass der Elektromotor 6 mit höherer Drehzahl aber dafür verringertem Motormoment betrieben wird, wie dies z.B. mit Feldschwächung möglich ist oder durch Umschalten der Wicklungen, z.B. Polpaarzahlen.

Der Belagsträger 4 ist dazu vorgesehen, mittels des Elektromotors 6, sowie gegebenenfalls nach entsprechender Umlenkung durch die Betätigungsmechanik 7, eine erste Bewegung in wenigstens einer ersten Bewegungsrichtung durchzuführen bzw. in einer solchen ersten Bewegung bewegt zu werden. Bevorzugt wird als erste Bewegung des Belagsträgers 4 dessen Bewegung in Richtung auf die Reibfläche 3 zu angesehen.

Der Belagsträger 4 ist weiters dazu vorgesehen, mittels des Elektromotors 6 in einer zweiten Bewegung in wenigstens einer zweiten Bewegungsrichtung bewegt zu werden, wobei die zweite Bewegung der ersten Bewegung entgegen gerichtet ist. Bevorzugt wird als zweite Bewegung des Belagsträgers 4 dessen Bewegung von der Reibfläche 3 weg angesehen.

Vorzugsweise weist die Bremse 2 weiters wenigstens eine Nachstellvorrichtung 8 auf, welche mit der Betätigungsmechanik 7 verbunden ist, wobei diese Nachstellvorrichtung 8 lediglich bei besonders bevorzugten Ausführungsformen vorgesehen ist. Mechanische Nachstellvorrichtungen 8 sind, insbesondere aus dem Bereich der LKW-Bremsen seit vielen Jahrzehnten in unterschiedlichen Ausführungsvarianten bekannt, und zumindest bei LKW-Bremsen Standard. Eine solche Nachstellvorrichtung 8 wird auch als Verschleißnachsteller bezeichnet.

Es hat sich gezeigt, dass, von der Erwartung abweichende Bremsmomente oftmals von einer Nachstellvorrichtung 8 bzw. den typischen Toleranzen einer Nachstellvorrichtung 8 verursacht werden. Diese Erkenntnis kann bei der Ermittlung des Korrekturfaktors angewendet werden, indem der Korrekturfaktor derart gebildet wird, dass wenigstens eine vorgebbare Toleranz einer Nachstellvorrichtung 8 ausgeglichen wird. Dadurch kann eine Abweichung sehr schnell bzw. zielgerichtet ausgeglichen werden.

Die Bremse 2 weist weiters bevorzugt wenigstens einen mechanischen Energiespier auf, welcher insbesondere als Feder ausgebildet ist, welche wenigstens mittelbar auf den Belagsträger 4 wirkt. Derartige Federn in Bremsen sind an sich bekannt und weit verbreitet. Derartige Federn vergrößern in der Regel einen Hysterese-Effekt zwischen dem Verhalten der Bremse 2 bei der ersten Bewegung gegenüber der zweiten Bewegung. Bei der gegenständlichen Bremsenanlage 1 kann auch dieser unterschiedliche Einfluss der Feder sowie deren alterungsbedingte Veränderungen, etwa der Federsteifigkeit, erkannt und ausgeglichen werden.

Die Bremsenanlage 1 weist eine Steuer- und Kontrolleinheit 9 auf, welche dazu vorgesehen und entsprechend ausgebildet ist, eingangsseitig eine Bremswirkungsanforderung zu empfangen, und auf Basis der Bremswirkungsanforderung ein Bremssteuersignal zu generieren und an den Regler 10 des Elektromotors 6 auszugeben.

Die Steuer- und Kontrolleinheit 9 ist insbesondere umfassend einem Mikrocontroller und/oder Mikroprozessor ausgebildet, wobei weitere elektronische Bauteile bzw. Baugruppen Teil der Steuer- und Kontrolleinheit 9 sein können. Die Steuer- und Kontrolleinheit 9 kann auch zumindest teilweise als Teil eines programmierbaren Logikbauteils ausgebildet sein. Insbesondere kann die Steuer- und Kontrolleinheit 9 aus mehreren Teilen bzw. Baugruppen bestehen, wobei einzelne Vorgänge bzw. Verarbeitungsschritte von bestimmten Teilen dieser Mehrzahl an Teilen bzw. Baugruppen durchgeführt werden.

Die Steuer- und Kontrolleinheit 9 ist dazu vorgesehen ein, von Seiten eines, menschlichen oder künstlichen, Fahrers bzw. Lenkers eines Fahrzeuges bzw. eines menschlichen oder künstlichen Operateurs einer Maschine an eine Interaktionsschnittstelle 16 des betreffenden Fahrzeuges bzw. der betreffenden Maschine mitgeteiltes Bedürfnis nach Verlangsamung der Geschwindigkeit bzw. Verzögerung in eine entsprechende Betätigung des Elektromotors 6 der Bremse 2 umzusetzen. Die Interaktionsschnittstelle 16 kann beispielsweise ein Sensor am sog. Bremspedal sein, eine nachrichtentechnische Schnittstelle eines Fahrzeugcomputers oder ein Bedienelement an einem Kontrollboard. Eine Eingabeschnittstelle der gegenständlichen Bremsenanlage 1 ist - als Teil eines Fahrzeuges - wenigstens mittelbar mit der Interaktionsschnittstelle 16 des betreffenden Fahrzeugs verbunden.

Die Bremsenanlage 1 umfasst weiters wenigstens einen Bremsentemperatursensor 15, welcher Bremsentemperatursensor 15 mit der Steuer- und Kontrolleinheit 9 nachrichtentechnisch verbunden ist.

Die Temperatur an der Reibfläche 3 ist eine Funktion des Bremsmoments, der Raddrehzahl, der Kühlwirkung sowie der Zeit. Die Wärmeleistung der Bremse 2 ist die Winkelgeschwindigkeit mal dem Bremsmoment. Indem die Winkelgeschwindigkeit über die gemessene Raddrehzahl ermittelt wird, und die Wärmeleistung über die Messung der Temperatur, kann folglich das Bremsmoment ermittelt werden.

Bei der Messung der betreffenden Temperatur sind die Wärmekapazitäten sowie die Wärmewiderstand der Bauteile, welche sich im Umfeld der Reibfläche 3 befinden sowie weiters insbesondere die Wärmekapazitäten sowie die Wärmewiderstand der Bauteile, welche zwischen der Reibfläche 3 und dem Bremsentemperatursensor 15 angeordnet sind, entsprechend zu berücksichtigen. Indem eine Temperatur möglichst nahe der Reibfläche 3 bzw. dem Bremsbelag 5 gemessen wird, kann sehr genau auf die Reibarbeit und damit auf das Integral der Reibkraft an der Bremse 2 geschlossen werden. Erfindungsgemäß ist vorgesehen, den Bremsentemperatursensor 15 an dem Elektromotor 6 anzuordnen. in diesem Zusammenhang kann bevorzugt vorgesehen sein, dass der Elektromotor 6 bereits einen internen bzw. integrierten Temperatursensor aufweist. Ein solcher Temperatursensor des Elektromotors 6 kann dabei dem ursprünglichen Zweck der Temperaturüberwachung des Elektromotors 6 dienen. Erfindungsgemäß wird ein derartiger Temperatursensor des Elektromotors 6 auch als Bremsentemperatursensor 15 verwendet.

Dadurch kann ein bereits vorhandener Sensor für mehrere Zwecke verwendet werden, wodurch die Anordnung eines weiteren, speziellen Bremsentemperatursensors 15 entfallen kann. Bei Anwendung des Temperatursensors des Elektromotors 6 als Bremsentemperatursensor 15 ist die Eigenerwärmung des Elektromotors 6 durch den elektrischen Strom sowie die Reibung herauszurechnen. Dies ist aufgrund der hohen Reproduzierbarkeit des Betriebs eines Elektromotors 6 einfach möglich.

Die Steuer- und Kontrolleinheit 9 ermittelt aufgrund der Bremswirkungsanforderung eine zeitliche Folge von Bremsentemperaturerwartungswerten. Die, vom Bremsentemperatursensor 15 ermittelten Temperaturwerte werden von der Steuer- und Kontrolleinheit 9 mit einem zeitlich korrespondierenden Wert der Bremsentemperaturerwartungswerte verglichen. Aufgrund einer vorgebbaren Abweichung der ermittelten Temperatur von dem korrespondierenden Wert der Bremsentemperaturerwartungswerte erstellt die Steuer- und Kontrolleinheit 9 wenigstens einen Korrekturfaktor, und korrigiert das Bremssteuersignal um den wenigstens einen Korrekturfaktor. Weiters wird der Regler 10 mit dem korrigierten Bremssteuersignal angesteuert.

In einer, mit der Steuer- und Kontrolleinheit 9 verbundenen Speichereinheit 13 sind Werte für wenigstens einen Wärmewiderstand und wenigstens eine Wärmekapazität der Bremse 2 sowie Zusammenhänge zwischen Bremswirkungsanforderung, Bremsmoment und Wärmeleistung abgelegt. Bevorzugt ermittelt die Steuer- und Kontrolleinheit 9 Bremsentemperaturerwartungswerte auf Basis dieser Werte und Zusammenhänge.

Bevorzugt ist vorgesehen, dass die Steuer- und Kontrolleinheit 9 bei der Bildung des Korrekturfaktors eine vorgebbare zeitliche Vergangenheit, insbesondere eine vorgebbarer Anzahl zeitdiskreter Temperaurwerte, berücksichtigt. Dadurch wird die gesamte Steuerung deutlich stabiler und neigt weniger dazu aufgrund einzelner Messergebnisse kurzzeitig die Ausgabe zu verändern.

Weiters kann die Bremsreibkraftwirkungssensoreinheit 20 zur Aufnahme weiterer Bremsreibkraftwirkung ausgebildet bzw. mit entsprechenden anderen Sensoren verbunden sein. Dabei kann es sich bei der zu detektierenden Wirkung der Bremskraft bzw. des Bremsmoments bzw. eines Bremsvorganges um jede Art einer entsprechenden Wirkung handeln. Wie eingangs dargelegt, ist es technisch schwierig und zudem unwirtschaftlich die Bremskraft direkt zu messen.

Gemäß einer ersten bevorzugten Weiterbildung ist vorgesehen, dass die wenigstens eine Bremsreibkraftwirkungssensoreinheit 20 wenigstens eine Verzögerungsermittlungseinheit 21 zur Ermittlung einer Verzögerung einer, mit der Bremsenanlage 1 gebremsten, Vorrichtung aufweist. Die Verzögerung bzw. die negative Beschleunigung ist eine unmittelbare Folge einer wirksamen Betätigung der Bremsenanlage 1.

Dabei ist insbesondere vorgesehen, dass die Verzögerungsermittlungseinheit 21 wenigstens einen Beschleunigungssensor 22, beispielsweise eine piezoelektrischen Beschleunigungssensor, umfasst, wodurch direkt die Beschleunigung gemessen werden kann.

Zusätzlich bzw. alternativ hiezu kann beispielsweise auch vorgesehen sein, die Verzögerung aus einer zeitlichen Ableitung einer Geschwindigkeitsdifferenz bzw. aus einer zweimalen Ableitung nach der Zeit einer Wegdifferenz zu ermitteln.

Entsprechend ist weiters bevorzugt vorgesehen, dass die Verzögerungsermittlungseinheit 21 wenigstens einen Satellitennavigationsempfänger 23 umfasst, wodurch einfach und zudem unabhängig von weiteren Sensoren der zurückgelegte Weg ermittelt werden kann. Weiters ist bevorzugt vorgesehen, dass die Verzögerungsermittlungseinheit 21 wenigstens ein Geschwindigkeitsmesssystem 24, wie dieser beispielsweise ein Standardsensor in einem Straßenfahrzeug ist, umfasst, wodurch einfach eine Geschwindigkeitsdifferenz ermittelt werden kann.

Besonders bevorzugt kann die Verzögerungsermittlungseinheit 21 wenigstens zwei der angeführten Systeme umfassen, und deren Ergebnisse miteinander kombinieren.

Gemäß einer zweiten bevorzugten Weiterbildung ist vorgesehen, dass die wenigstens eine Bremsreibkraftwirkungssensoreinheit 20 wenigstens einen Lagesensor 25, insbesondere wenigstens ein Gyroskop und/oder einen Neigungsmesser, aufweist, wobei der wenigstens eine Lagesensor 25 wenigstens zum Messen einer Nickrate und/oder eines Nickwinkels einer, mit der Bremsenanlage 1 gebremsten, Vorrichtung vorgesehen ist. Der Lagesensor 25 ist entsprechend auszubilden bzw. anzuordnen. Insbesondere bei Straßenfahrzeugen kommt es aufgrund einer Bremsung zu einem Einnicken des Fahrzeuges, wobei aus dem Maß des Nickens - bei einem bestimmten Fahrzeugtyp - bereits sehr genau auf die Bremskraft geschlossen werden kann.

Gemäß einer dritten bevorzugten Weiterbildung ist vorgesehen, dass die wenigstens eine Bremsreibkraftwirkungssensoreinheit 20 wenigstens eine Verformungsermittlungseinheit 26 aufweist, und dass die Verformungsermittlungseinheit 26 zur Ermittlung einer, insbesondere elastischen, Verformung wenigstens eines vorgebbaren Teils, insbesondere einer Feder, einer mit der Bremsenanlage 1 gebremsten Vorrichtung vorgesehen ist. Dadurch können elastische Verformungen, welche an den mechanischen Teilen eines Gegenstandes während des Bremsvorganges auftreten, erfasst und derart auf die Bremskraft geschlossen werden. Dabei kann vorgesehen sein, auch das Maß an Kompression einer Feder, etwa einer Feder einer vorderen Radaufhängung, zu messen. Besonders bevorzugt ist vorgesehen, dass die Bremsreibkraftwirkungssensoreinheit 20 eine vorgebbare Mehrzahl der vorstehend angeführten bevorzugten Ausführungsformen umfasst, und dass die jeweils ermittelten Messergebnisse miteinander kombiniert werden. Dies kann mit einem vorgebbaren statistischen Verfahren erfolgen. Bevorzugt werden die einzelnen Messergebnisse mittels Sensor-Data-Fusion kombiniert. Bei der Kombination der Messergebnisse kann weiters vorgesehen sein, einzelne Sensoren mit veränderlichen Gewichtungsfaktoren zu bewerten. So kann beispielsweise vorgesehen sein, die Daten eines GPS-Gerätes abhängig von der Stellung der Satelliten zu gewichten.

Ein Messsignalausgang der Bremsreibkraftwirkungssensoreinheit 20 ist mit einem Messeingang der Steuer- und Kontrolleinheit 9 verbunden. Die Bremsreibkraftwirkungssensoreinheit 20 ermittelt während eines Bremsvorganges auftretende Wirkungen, welche als Bremsreibkraftwirkung bezeichnet werden. Aus dieser wenigstens einen Bremsreibkraftwirkung ermittelt die Steuer- und Kontrolleinheit 9 eine tatsächliche Bremswirkung. Dies kann aufgrund der bekannten physikalischen Zusammenhänge erfolgen.

Fig. 2 zeigt ein Blockschaltbild einer derartigen Anlage, wobei die Bremsreibkraftwirkungssensoreinheit 20 als Teil der Steuer- und Kontrolleinheit 9 dargestellt bzw. ausgebildet ist. Selbstverständlich ist eine eigenständige bzw. separate Ausbildung der beiden Komponenten ebenfalls möglich.

In diesem Zusammenhang ist bevorzugt - und wie in Fig. 2 dargestellt - vorgesehen, dass die Bremsenanlage 1 oder eine zu bremsende Vorrichtung, wie insbesondere ein Fahrzeug, wenigstens eine Massenermittlungseinheit 27 aufweist. Diese Massenermittlungseinheit 27 kann dabei etwa Teil der Bremsreibkraftwirkungssensoreinheit 20 sein, bzw. mit dieser oder der Steuer- und Kontrolleinheit 9 verbunden sein. Die Massenermittlungseinheit 27 ist zur wenigstens näherungsweisen Ermittlung einer Masse einer mit der Bremsenanlage 1 zu bremsenden Vorrichtung ausgebildet.

Bei Ausbildung der zu bremsenden Vorrichtung als Fahrzeug kann die Massenermittlungseinheit 27 beispielsweise die Leermasse des betreffenden Fahrzeugs als Ausgangswert gespeichert haben. Über Sensoren in den Federn und/oder den Sitzen usw. kann auf einen Beladungszustand geschlossen werden. Weiters können die Daten einer Motorsteuerung herangezogen werden, da ein schwer beladenes Fahrzeug mehr Motorleistung erfordert um zu beschleunigen.

Die Steuer- und Kontrolleinheit 9 vergleicht eine Bremswirkungsanforderung mit der tatsächlich auftretenden Bremswirkung. Bei Auftreten einer vorgebbaren Abweichung der Bremswirkung von der Bremswirkungsanforderung ermittelt die Steuer- und Kontrolleinheit 9 wenigstens einen Korrekturfaktor, insbesondere wenigstens eine Korrekturfaktorenmenge, vorzugsweise wenigstens eine Korrekturkurve. Weiters korrigiert die Steuer- und Kontrolleinheit 9 das Bremssteuersignal um den wenigstens einen Korrekturfaktor, insbesondere die Korrekturfaktorenmenge, vorzugsweise die Korrekturkurve, und steuert den Regler 10 mit dem korrigierten Bremssteuersignal an.

Gemäß einer bevorzugten Weiterbildung einer gegenständlichen Bremsenanlage 1 ist vorgesehen, dass dieser wenigstens ein erster Temperatursensor 14 zugeordnet ist, daher dass diese mit wenigstens einem ersten Temperatursensor 14 verbunden ist und/oder, dass ein solcher erster Temperatursensor 14 Teil der Bremsenanlage 1 selbst ist. Der erste Temperatursensor 14 ist mit der Steuer- und Kontrolleinheit 9 verbunden. Die Sensoren können die Umgebungstemperatur oder Temperaturen in der Bremse 2 oder der Elektronik oder im Motor erfassen, je nachdem wo diese angeordnet sind.

Bevorzugt ist vorgesehen, Korrekturfaktoren in Zusammenhang mit vorgebbaren Randbedingungen, insbesondere Umgebungstemperatur, Betriebsdauer und Masse der zu bremsenden Vorrichtung in der Speichereinheit 13 abzulegen, und aufgrund jeweils ermittelter bzw. gemessener Werte für wenigstens einen dieser Randbedingungen bereits bei der ersten Ansteuerung der Bremse 2 einen entsprechend passenden Korrekturfaktor aus der Speichereinheit 13 auszuwählen, und das Bremssteuersignal bereits entsprechend zu korrigieren.

In diesem Zusammenhang kann weiters vorgesehen sein, dass eine vorgebbare Mehrzahl Wärmewiderstande in der Speichereinheit 13 gespeichert sind, und dass die unterschiedlichen Wärmewiderstände geschwindigkeits- und/oder umgebungstemperaturabhängige Kühlwirkungen abbilden. Dadurch können Kühleffekte, die sich aus Fahrtwind, der Wirkung der Felgen oder ähnlicher wiederholt auftretender Effekte ebenfalls berücksichtigt werden.

Insbesondere ist vorgesehen, dass das Einlesen der Temperatur und deren Berücksichtigung im Zuge der Inbetriebnahme des betreffend ausgestatteten Fahrzeuges erfolgt. Weiters ist bevorzugt vorgesehen, dass deren Einlesen und Berücksichtigen in vorgebbaren Intervallen und/oder bei Überschreiten eines vorgebbaren Grenztemperaturintervalls erfolgt. Dadurch kann die Bremsenanlage 1 noch vor deren ersten Betätigung bzw. nach einer längeren Nichtbenützung an die Umgebungsbedingungen angepasst werden. Dabei ist eine besonders hohe Genauigkeit des Temperatursensors 14 nicht erforderlich, da dieser nur hilft sog. Default-Werte bzw. Settings für den Betrieb der Bremsenanlage 1 auszuwählen. Sobald die Bremsenanlage 1 in Betrieb ist wird der wenigstens eine Korrekturfaktor ohnedies entsprechend angepasst. Durch die Vorwahl geeigneter Anfangswerte kann jedoch die Steuerung der Bremsenanlage 1 mit geringeren Anpassungen während des Bremsens erfolgen.

Neben der Ermittlung einer Umgebungstemperatur mittels eines entsprechenden Temperatursensors 14 kann weiters vorgesehen sein, weitere Zustände der Umgebung zu ermitteln, und die gegenständliche Steuerung mit einfließen zu lassen. Insbesondere sind dies Feuchtigkeit bzw. Nässe und Wind. Regen bzw. Bodennässe können eine stärkere Wärmeabfuhr von der Bremse 2 zur Folge haben. Ebenso kann starker Wind die Wärmeabfuhr verbessern. Bevorzugt ist ein Regensensor und/oder ein Bodenfeuchtigkeitssensor und/oder ein Windsensor vorgesehen, und mit der Steuer- und Kontrolleinheit 9 verbunden. Zusätzlich bzw. alternativ hiezu kann vorgesehen sein, eine Temperaturausgleichskennlinie zu ermitteln, welche zufolge einer Funktion:

$$T_{(t)} = e^{-\frac{t}{\tau}}$$

verläuft, wobei $\tau$ in an sich bekannter Weise das Produkt aus Widerstand bzw. Wärmewiderstand und Kapazität bzw. Wärmekapazität ist. Da sich die Wärmekapazität der Bremse 2 auch bei Regen kaum verändert, kann daher aus einem ermittelten Temperaturverlauf auf einen veränderten Wärmewiderstand geschlossen werden. Bevorzugt wird ein derartiger ermittelter aktueller Wärmewiderstand bei der Ansteuerung des Reglers 10 durch die Steuer- und Kontrolleinheit 9 berücksichtigt.

Weiters kann vorgesehen sein, dass die Bremsenanlage 1 wenigstens eine Einheit zur Ermittlung einer Umgebungsluftgeschwindigkeit und/oder ein Geschwindigkeitsmesssystem 24 umfasst, welche mit der Steuer- und Kontrolleinheit 9 verbunden sind. Dabei kann es sich etwa um ein Stau- bzw. Pitotrohr handeln.

Bevorzugt ist eine Messgröße eines Kraftsensors oder eine Messgröße eines Bremsmomentsensors nicht in die Steuerung bzw. Regelung der Bremsenanlage 1 eingeht. Entsprechend ist bevorzugt vorgesehen, dass die Bremsenanlage 1 kraftsensorfrei, insbesondere normalkraftsensorfrei, ausgebildet ist und/oder auch ohne die Messwerte eines entsprechenden Kraftsensors funktioniert.

Zur Ermittlung des wenigstens einen Korrekturfaktors weist die Steuer- und Kontrolleinheit 9 eine Einheit 18 auf, welche dazu ausgebildet ist die ermittelten realen Bremsentemperaturen mit den Bremsentemperaturerwartungswerten zu vergleichen und einen entsprechenden Korrekturwert zu bilden. Dies ist im Rahmen der digitalen Signalverarbeitung in unterschiedlichen Varianten möglich, und muss nicht näher erläutert werden.

Die Einheit 18 ist mit einer Einheit 19 verbunden, welche das Bremssteuersignal bildet und an den Regler 10 ausgibt.

In der Speichereinheit 13 sind weiters allgemeine Daten zu einer bestimmten Bremse 2 abgelegt. Dies sind insbesondere die Soll-Abmessungen der Bremse, sowie die Soll-Reibbeiwerte. Weiters werden dabei zumindest die letzten, vor einer Außerbetriebnahme der jeweiligen Bremsenanlage 1 ermittelten Korrekturwerte gespeichert.

Insbesondere ist dabei vorgesehen, dass die jeweils neu ermittelten Daten sogleich Eingang in die Ansteuerung des Elektromotors 6 finden.

Die Steuerung der Bremse 2 kann an sich auf zwei unterschiedliche Arten erfolgen, entweder als sog. "Positionssteuerung" des wenigstens einen Bremsbelags 5, oder durch Vorgabe eines Zielbremsmoments, in Form eines zu erreichenden Motordrehmoments, gegebenenfalls unter Berücksichtigung eines, insbesondere nicht-linearen, Übersetzungsverhältnis.

Bei der "Positionssteuerung" wird die Motorposition, insbesondere als Motordrehungsbogenlänge oder als Winkel oder als eine Position eines vorgebbaren Teils der Betätigungsmechanik 7 bzw. des Belagsträgers 4 oder des Bremsbelages 5 vorgegeben.

Bei der Vorgabe eines Zielbremsmoments, dies kann auch als "kraftgesteuert" bzw. Kraftsteuerung bzw. Momentsteuerung bezeichnet werden, wird im Stand der Technik in der Regel ein Drehmoment des Elektromotors vorgegeben.

Eine Eigenart der sog. Kraftsteuerung gegenüber der Positionssteuerung ist, dass diese - bei Regelung über das Drehmoment des Elektromotors - zu einer deutlichen Hysterese neigt. Sofern die Steuer- und Kontrolleinheit 9 in einer Situation, in welcher sich die beweglichen Teile der Bremse in Ruhe befinden, etwa während der Bremsbelag 5 gegen die Reibfläche 3 gedrückt wird, lediglich ein derart geringfügig verändertes Motordrehmoment ermittelt bzw. ausgibt, dass dabei die Haftreibungen innerhalb der Betätigungsmechanik 7 nicht überschritten werden, dann kommt es trotz der veränderten Ansteuerung zu keiner Veränderung der Bremswirkung, da sich die Betätigungsmechanik 7 selbst nicht bewegt.

Ein besonderer Vorteil der Vorgabe eines Zielbremsmoments ist, dass das Drehmoment proportional der Kraft des Bremsbelages 5 auf die Reinfläche 3 ist. Bei der Steuerung über ein Zielbremsmoment hat die jeweils vorherrschende Steifigkeit der Bremse 2 bzw. deren Teile keine Auswirkungen. Vielmehr wird die Steuer- und Kontrolleinheit 9 bestrebt sein, dass Zielbremsmoment zu erreichen. Durch die Bremsreibkraftwirkungssensoreinheit 20 kann auch einfach überprüft werden, ob dieses Zielbremsmoment auch tatsächlich erreicht wird. Dadurch sind Haft/Gleitreibungsübergänge nicht mehr relevant.

Selbstverständlich ist dabei vorgesehen, allfällige nicht lineare Übersetzungen der Betätigungsmechanik 7 bei der Steuerung bzw. Regelung mit zu berücksichtigen. Beispielsweise kann - bei entsprechender Übersetzung - auch ein nur geringfügig verändertes Drehmoment des Elektromotors 6 zu einer erheblichen Veränderung der Anpresskraft führen. Da die entsprechende Übertragungsfunktion der Betätigungsmechanik 7 jedoch der Steuer- und Kontrolleinheit 9 bekannt ist, wird dies bei der Steuerung bzw. Regelung berücksichtigt.

Bei Einbau der Bremsenanlage 1 in ein Fahrzeug, kann die Genauigkeit der Bremswirkung weiters durch eine Vernetzung der Bremsenanlage 1 mit Sensoren des Fahrzeuges gesteigert werden. In Weiterbildung kann daher bevorzugt vorgesehen sein, dass das Fahrzeug wenigstens einen Sensor zur Ermittlung einer individuellen Raddrehzahl und/oder eines Radschlupfes, insbesondere als Teil eines ABS und/oder ESP des Fahrzeuges, aufweist, dass der Sensor wenigstens mittelbar mit der Steuer- und Kontrolleinheit 9 der Bremsenanlage 1 verbunden ist, dass die Steuer- und Kontrolleinheit 9 weiters dazu ausgebildet ist, während eines Bremsvorganges die von dem Sensor ermittelte Raddrehzahl bzw.

den Radschlupf mit wenigstens einem Wert für eine entsprechende Betriebsverhaltenserwartung zu vergleichen, und bei einer vorgebbaren Abweichung den wenigstens einen Korrekturfaktor anzupassen.

Bevorzugt ist die Steuer- und Kontrolleinheit 9 dazu ausgebildet mittels sog. Sensor-Fusion die einzelnen ermittelten Messgrößen zu verbinden.

Gemäß einer weiteren bevorzugten Ausführung eines Radfahrzeuges mit einer gegenständlichen Bremsenanlage kann vorgesehen sein, dass das Radfahrzeug eine erste und eine zweite Bremsenanlage aufweist, wobei die erste Bremsenanlage zum Bremsen eines linken Rades vorgesehen ist, und wobei die zweite Bremsenanlage zum Bremsen eines rechten Rades vorgesehen ist. Dabei kann vorgesehen sein, dass einzelne Komponenten der ersten Bremsenanlage auch von der zweiten Bremsenanlage genutzt werden, insbesondere die Steuer- und Kontrolleinheit 9. In diesem Zusammenhang ist weiters bevorzugt vorgesehen, dass ein erstes Bremssteuersignal der ersten bzw. linken Bremsenanlage und ein zweites Bremssteuersignal der zweiten bzw. rechten Bremsenanlage derart aufeinander abgestimmt bzw. miteinander abglichen werden, dass eine durch die erste Bremsenanlage ermittelte erste Bremsreibkraftwirkung sowie eine durch die zweite Bremsenanlage ermittelte zweite Bremsreibkraftwirkung im Wesentlichen gleich bzw. identisch sind. Dadurch kann eine beidseitig gleiche Bremswirkung erreicht werden. Dadurch kann eine unterschiedliche Abnutzung bzw. ein unterschiedlicher Alterungszustand auf einer Fahrzeugseite ausgeglichen werden.

Sofern die zu bremsende Vorrichtung mittels eines Antriebselektromotors angetrieben wird, wie dies etwa bei einem Elektrofahrzeug oder einem sog. Hybridfahrzeug der Fall ist, kann auch mittels Generatorbetrieb gebremst werden.

Weiters kann ein elektrisches Bremsen vorgesehen sein, wenn die Vorrichtung eine Wirbelstrombremse aufweist. Bei derartig ausgebildeten Vorrichtungen ist ein kombinierter Betrieb dieser rein elektrisch wirkenden Bremsmöglichkeiten via Generatorbetrieb bzw. Wirbelstrombremsung mit einer gegenständlichen Bremse vorgesehen. Dabei ist vorgesehen, dass anfangs mittels Generatorbetrieb bzw. Wirbelstrombremsung erfolgt, und dann, wenn deren Wirkung anfängt nachzulassen, entsprechend mehr mit der gegenständlichen Bremsenanlage 1 gebremst wird.

Da die Bremswirkung bei Generatorbetrieb bzw. Wirbelstrombremsung sehr genau bekannt ist, und ein gleitender Übergang von der Bremsung mittels Generatorbetrieb bzw. Wirbelströmen zur Bremsung mittels der gegenständlichen Bremsenanlage 1 vorgesehen ist, kann dadurch die tatsächliche Bremswirkung der gegenständlichen Bremsenanlage 1 weiters überprüft werden. Dabei ist insbesondere vorgesehen, dass die Bremsenanlage weiters eine elektrische Generatorbremse aufweist, und dass die Steuer- und Kontrolleinheit 9 ein Generatorbremsmoment der Generatorbremse bei der Ermittlung der Bremsentemperaturerwartungswerte berücksichtigt.

Gemäß einer weiteren bevorzugten Ausführungsform ist weiters vorgesehen, dass nach Beendigung eines Bremsvorganges das nachfolgende Abkühlverhalten bzw. das Absinken der Temperatur mittels des wenigstens einen Bremsentemperatursensors 15 aufgenommen wird. Indem das Abkühlverhalten der Bremse 2 ausgewertet wird, kann einfach das Modell zur Ermittlung der Bremsentemperaturerwartungswerte angepasst bzw. überprüft werden. Etwaige wirksame Hysterese-Effekte aufgrund wenigstens eines Phasenüberganges in wenigstens einem der Bauteile der Bremse 2 können dabei berücksichtigt werden. Dadurch kann auch ein, von den Werkseinstellungen abweichendes Verhalten, etwa aufgrund anderer Felgen bzw. Reifen, erkannt und die Ermittlung der Bremsentemperaturerwartungswerte entsprechend nachgeführt werden.

## Patentansprüche

1. Bremsenanlage (1) umfassend wenigstens eine Bremse (2), wobei die Bremse (2)

   - wenigstens eine Reibfläche (3),
   - wenigstens einen Belagsträger (4) mit wenigstens einem Bremsbelag (5),
   - eine Betätigungsmechanik (7), an welcher der Belagsträger (4) gelagert ist, und
   - vorzugsweise wenigstens eine Nachstellvorrichtung (8),

   aufweist, wobei die Bremsenanlage (1) eine Steuer- und Kontrolleinheit (9) aufweist, welche dazu ausgebildet ist eingangsseitig eine Bremswirkungsanforderung zu empfangen, und auf Basis der Bremswirkungsanforderung ein Bremssteuersignal zu generieren und an einen Regler (10) der Bremse (2) auszugeben, wobei die Bremsenanlage (1) wenigstens einen Bremsentemperatursensor (15) umfasst, welcher Bremsentemperatursensor (15) mit der Steuer- und Kontrolleinheit (9) nachrichtentechnisch verbunden ist, wobei die Steuer- und Kontrolleinheit (9) dazu ausgebildet ist, aufgrund der Bremswirkungsanforderung eine zeitliche Folge von Bremsentemperaturerwartungswerten zu ermitteln, und weiters eine vom Bremsentemperatursensor (15) ermittelte Temperatur mit einem zeitlich korrespondierenden Wert der Bremsentemperaturerwartungswerte zu vergleichen, und aufgrund einer vorgebbaren Abweichung der ermittelten Temperatur von dem korrespondierenden Wert der Bremsentemperaturerwartungswerte wenigstens einen Korrekturfaktor zu ermitteln, weiters das Bremssteuersignal um den wenigstens einen Korrekturfaktor zu korrigieren, und den Regler (10) mit dem korrigierten Bremssteuersignal anzusteuern, **dadurch gekenn-**

**zeichnet, dass** die Bremsenanlage (1) als elektromechanische Bremsenanlage (1) ausgebildet ist, dass die Bremse (2) weiters wenigstens einen Elektromotor (6) zum vorgebbaren Bewegen des Belagsträgers (4) umfasst, welcher Elektromotor (6) weiters mit der Betätigungsmechanik (7) verbunden ist, dass der Regler (10) den Elektromotor (6) regelt, und dass der Bremsentemperatursensor (15) an dem Elektromotor (6) angeordnet ist.

2. Bremsenanlage (1) nach Anspruch 1, **dadurch gekennzeichnet, dass** in einer, mit der Steuer- und Kontrolleinheit (9) verbundenen Speichereinheit (13) Werte für wenigstens einen Wärmewiderstand und wenigstens eine Wärmekapazität der Bremse (2) sowie Zusammenhänge zwischen Bremswirkungsanforderung, Bremsmoment und Wärmeleistung abgelegt sind, und dass die Steuer- und Kontrolleinheit (9) Bremsentemperaturerwartungswerte auf Basis dieser Werte und Zusammenhänge ermittelt.

3. Bremsenanlage (1) nach Anspruch 2, **dadurch gekennzeichnet, dass** eine vorgebbare Mehrzahl Wärmewiderstande in der Speichereinheit (13) gespeichert sind, und dass die unterschiedlichen Wärmewiderstände geschwindigkeits- und/oder umgebungstemperaturabhängige Kühlwirkungen abbilden.

4. Bremsenanlage (1) nach einem der Ansprüche 1 bis 3, **dadurch gekennzeichnet, dass** die Bremsenanlage (1) wenigstens einen Umgebungstemperatursensor (14) zur wenigstens mittelbaren Ermittlung einer Temperatur einer vorgebbaren Umgebung einer, mit der Bremsenanlage (1) zu bremsenden, Vorrichtung aufweist, welcher Umgebungstemperatursensor (14) mit der Steuer- und Kontrolleinheit (9) verbunden ist.

5. Bremsenanlage (1) nach einem der Ansprüche 1 bis 4, **dadurch gekennzeichnet, dass** die Bremsenanlage (1) wenigstens eine Einheit zur Ermittlung einer Umgebungsluftgeschwindigkeit und/oder ein Geschwindigkeitsmesssystem (24) umfasst, welche mit der Steuer- und Kontrolleinheit (9) verbunden sind.

6. Bremsenanlage (1) nach einem der Ansprüche 1 bis 5, **dadurch gekennzeichnet, dass** die Steuer- und Kontrolleinheit (9) bei der Bildung des Korrekturfaktors eine vorgebbare zeitliche Vergangenheit, insbesondere eine vorgebbarer Anzahl zeitdiskreter Temperaurwerte, berücksichtigt.

7. Bremsenanlage (1) nach einem der Ansprüche 2 bis 6, **dadurch gekennzeichnet, dass** in der Speichereinheit (13) wenigstens eine vorgebbare, insbesondere ursprüngliche, Abmessung des Bremsbelags (5) und/oder der Reibfläche (3), und/oder wenigstens ein, insbesondere ursprünglicher, Reibungskoeffizient für die Paarung aus Bremsbelag (5) und Reibfläche (3) abgelegt ist, und dass die Steuer- und Kontrolleinheit (9) das Bremssteuersignal unter Berücksichtigung der wenigstens einen Abmessung und/oder des Reibungskoeffizienten generiert.

8. Bremsenanlage (1) nach einem der Ansprüche 1 bis 7, **dadurch gekennzeichnet, dass** die Betätigungsmechanik (7) einen mechanischen Eingang aufweist, welcher mit dem Elektromotor (6) verbunden ist, dass die Betätigungsmechanik (7) einen mechanischen Ausgang aufweist, welcher mit dem Belagsträger (4) verbunden ist, und dass die Betätigungsmechanik (7) derart ausgebildet ist, dass eine Bewegung am Eingang über einen vorgebbar nicht linearen Zusammenhang mit einer Bewegung des Ausgangs zusammenhängt.

9. Bremsenanlage (1) nach einem der Ansprüche 2 bis 8, **dadurch gekennzeichnet, dass** eine Übertragungsfunktion der Betätigungsmechanik (7) in der Speichereinheit (13) abgelegt ist.

10. Bremsenanlage (1) nach einem der Ansprüche 1 bis 9, **dadurch gekennzeichnet, dass** die Bremsenanlage (1) kraftsensorfrei ausgebildet ist.

11. Bremsenanlage (1) nach einem der Ansprüche 1 bis 10, **dadurch gekennzeichnet, dass** die Bremsenanlage weiters eine elektrische Generatorbremse aufweist, und dass die Steuer- und Kontrolleinheit (9) ein Generatorbremsmoment der Generatorbremse bei der Ermittlung der Bremsentemperaturerwartungswerte berücksichtigt.

12. Fahrzeug mit wenigstens einer Bremsenanlage (1) nach einem der Ansprüche 1 bis 11.

13. Fahrzeug nach Anspruch 12, **dadurch gekennzeichnet, dass** das Fahrzeug wenigstens einen Sensor zur Ermittlung einer individuellen Raddrehzahl und/oder eines Radschlupfes, insbesondere als Teil eines ABS und/oder ESP des Fahrzeuges, aufweist, und/oder einen Regensensor aufweist, dass der Sensor wenigstens mittelbar mit der Steuer- und Kontrolleinheit (9) der Bremsenanlage (1) verbunden ist, dass die Steuer- und Kontrolleinheit (9) weiters dazu ausgebildet ist, während eines Bremsvorganges die von dem Sensor ermittelte Raddrehzahl bzw. den Radschlupf mit wenigstens einem Grenzwert zu vergleichen, und bei einer vorgebbaren Abweichung den wenigstens einen Korrekturfaktor anzupassen.

14. Fahrzeug nach einem der Ansprüche 12 oder 13, **dadurch gekennzeichnet, dass** die Bremsenanlage (1) wenigstens eine erste und eine zweite Bremsen (2) aufweist, dass die Steuer- und Kontrolleinheit (9) dazu ausgebildet ist, jeweils aufgrund der Bremswirkungsanforderung unabhängige Bremsentemperaturerwartungswerte für die erste Bremse und die zweite Bremse zu ermitteln, und weiters jeweils die unabhängig ermittelten Temperaturen der ersten bzw. zweiten Bremse mit den jeweils zeitlich korrespondierenden Wert der Bremsentemperaturerwartungswerte zu vergleichen, jeweils unabhängige erste und zweite Korrekturfaktoren für die erste bzw. zweite Bremse zu bilden, und die Bremssteuersignale der ersten bzw. zweiten Bremse um den jeweiligen Korrekturfaktor zu korrigieren.

15. Verfahren zum Betreiben einer Bremsenanlage (1) umfassend wenigstens eine Bremse (2), wobei die Bremse (2)

  - wenigstens eine Reibfläche (3),
  - wenigstens einen Belagsträger (4) mit wenigstens einem Bremsbelag (5),
  - eine Betätigungsmechanik (7), an welcher der Belagsträger (4) gelagert ist, und
  - vorzugsweise wenigstens eine Nachstellvorrichtung (8),

aufweist, wobei die Bremsenanlage (1) eine Steuer- und Kontrolleinheit (9) aufweist, wobei von der Steuer- und Kontrolleinheit (9) eingangsseitig eine Bremswirkungsanforderung empfangen wird, und auf Basis der Bremswirkungsanforderung ein Bremssteuersignal generiert und an einen Regler (10) der Bremse (2) ausgegeben wird, wobei die Bremsenanlage (1) als elektromechanische Bremsenanlage (1) ausgebildet ist, wobei die Bremse (2) weiters wenigstens einen Elektromotor (6) zum vorgebbaren Bewegen des Belagsträgers (4) umfasst, welcher Elektromotor (6) weiters mit der Betätigungsmechanik (7) verbunden ist, wobei der Regler (10) den Elektromotor (6) regelt, wobei

  - wenigstens eine Temperatur von einem Bremsentemperatursensor (15) der Bremsenanlage (1), welcher Bremsentemperatursensor (15) an dem Elektromotor (6) angeordnet ist, ermittelt und an die Steuer- und Kontrolleinheit (9) übermittelt wird,
  - wobei die Steuer- und Kontrolleinheit (9) aufgrund der Bremswirkungsanforderung eine zeitliche Folge von Bremsentemperaturerwartungswerten ermittelt,
  - wobei die Steuer- und Kontrolleinheit (9) weiters eine vom Bremsentemperatursensor (15) ermittelte Temperatur mit einem zeitlich korrespondierenden Wert der Bremsentemperaturerwartungswerte vergleicht,

  - wobei die Steuer- und Kontrolleinheit (9) aufgrund einer vorgebbaren Abweichung der ermittelten Temperatur von dem korrespondierenden Wert der Bremsentemperaturerwartungswerte wenigstens einen Korrekturfaktor ermittelt,
  - und wobei die Steuer- und Kontrolleinheit (9) das Bremssteuersignal um den wenigstens einen Korrekturfaktor korrigiert, und den Regler (10) mit dem korrigierten Bremssteuersignal ansteuert.

**Claims**

1. A brake system (1) comprising at least one brake (2), wherein the brake (2) has

    - - at least one friction surface (3),
    - - at least one pad carrier (4) with at least one brake pad (5),
    - - an actuating mechanism (7) on which the pad carrier (4) is mounted, and
    - - preferably at least one adjusting device (8),

   wherein the brake system (1) has a control and monitoring unit (9) which is designed to receive a braking effect request on the input side and to generate a brake control signal on the basis of the braking effect request and to output it to a controller (10) of the brake (2), wherein the brake system (1) comprises at least one brake temperature sensor (15), which brake temperature sensor (15) is communicatively connected to the control and monitoring unit (9), wherein the control and monitoring unit (9) is designed to determine a temporal sequence of brake temperature expectation values on the basis of the braking effect request, and furthermore to compare a temperature determined by the brake temperature sensor (15) with a temporally corresponding value of the brake temperature expectation values, and to determine at least one correction factor on the basis of a predeterminable deviation of the determined temperature from the corresponding value of the brake temperature expectation values, and to correct the brake control signal by the at least one correction factor, and to actuate the controller (10) using the corrected brake control signal, **characterized in that** the brake system (1) is designed as an electromechanical brake system (1), **in that** the brake (2) further comprises at least one electric motor (6) for specifiable moving of the pad carrier (4), which electric motor (6) is further connected to the actuating mechanism (7), that the controller (10) controls the electric motor (6), and **in that** the brake temperature sensor (15) is arranged on the electric motor (6).

2. The brake system (1) according to claim 1, **charac-**

terized in that values for at least one thermal resistance and at least one thermal capacity of the brake (2) as well as relationships between braking effect request, braking torque, and thermal power are stored in a memory unit (13) connected to the control and monitoring unit (9), and **in that** the control and monitoring unit (9) determines brake temperature expectation values on the basis of these values and relationships.

3. The brake system (1) according to claim 2, **characterized in that** a specifiable plurality of thermal resistances is further stored in the storage unit (13), and **in that** the various thermal resistances represent speed and/or ambient temperature dependent cooling effects.

4. The brake system (1) according to any one of claims 1 to 3, **characterized in that** the brake system (1) has at least one ambient temperature sensor (14) for at least indirect determination of a temperature of a specifiable environment of a device to be braked with the brake system (1), which ambient temperature sensor (14) is connected to the control and monitoring unit (9).

5. The brake system (1) according to any one of claims 1 to 4, **characterized in that** the brake system (1) may comprise at least one unit for determining an ambient air speed and/or a speed measuring system (24), which are connected to the control and monitoring unit (9).

6. The brake system (1) according to any one of claims 1 to 5, **characterized in that** the control and monitoring unit (9) takes into account a specifiable time history, particularly a specifiable number of discrete time-temperature values, when forming the correction factor.

7. The brake system (1) according to any one of claims 2 to 6, **characterized in that** at least one predeterminable, particularly original, dimension of the brake pad (5) and/or of the friction surface (3), and/or at least one, particularly original, coefficient of friction for the pairing of brake pad (5) and friction surface (3) is stored in the memory unit (13), and **in that** the control and monitoring unit (9) generates the brake control signal taking into account the at least one dimension and/or coefficient of friction.

8. The brake system (1) according to any one of claims 1 to 7, **characterized in that** the actuating mechanism (7) has a mechanical input which is connected to the electric motor (6), **in that** the actuating mechanism (7) has a mechanical output which is connected to the pad carrier (4), and **in that** the actuating mechanism (7) is designed in such a manner that a movement at the input is related to a movement of the output via a specifiable non-linear relationship.

9. The brake system (1) according to any one of claims 2 to 8, **characterized in that** a transfer function of the actuating mechanism (7) is stored in the memory unit (13).

10. The brake system (1) according to any one of claims 1 to 9, **characterized in that** the brake system (1) is designed without a force sensor.

11. The brake system (1) according to any one of claims 1 to 10, **characterized in that** the brake system further comprises an electric generator brake, and **in that** the control and monitoring unit (9) takes a generator braking torque of the generator brake into account when determining the brake temperature expectation values.

12. A vehicle having at least one brake system (1) according to any one of claims 1 to 11.

13. The vehicle according to claim 12, **characterized in that** the vehicle can preferably have at least one sensor for determining an individual wheel speed and/or a wheel slip, particularly as part of an ABS and/or ESP of the vehicle, and/or has a rain sensor, **in that** the sensor is at least indirectly connected to the control and monitoring unit (9) of the brake system (1), **in that** the control and monitoring unit (9) is further designed to compare the wheel speed or wheel slip determined by the sensor with at least one value for a corresponding operating behavior expectation during a braking process, and to adjust the at least one correction factor in the event of a specifiable deviation.

14. The vehicle according to any one of claims 12 or 13, **characterized in that** the brake system (1) has at least a first and a second brake (2), **in that** the control and monitoring unit (9) is designed to determine independent brake temperature expectation values for the first brake and the second brake in each case on the basis of the braking effect request, and furthermore to compare the independently determined temperatures of the first and second brakes in each case with the respective temporally corresponding value of the brake temperature expectation values, to form independent first and second correction factors for the first and second brakes in each case, and to correct the brake control signals of the first and second brakes by the respective correction factor.

15. A method for operating a brake system (1) comprising at least one brake (2), wherein the brake (2) has

- at least one friction surface (3),
- at least one pad carrier (4) with at least one brake pad (5),
- an actuating mechanism (7) on which the pad carrier (4) is mounted, and
- preferably at least one adjusting device (8),

wherein the brake system (1) has a control and monitoring unit (9), wherein a braking effect request is received from the control and monitoring unit (9) on the input side, and a brake control signal is generated on the basis of the braking effect request and output to a controller (10) of the brake (2),wherein the brake system (1) is designed as an electromechanical brake system (1), in that the brake (2) further comprises at least one electric motor (6) for specifiable moving of the pad carrier (4), which electric motor (6) is further connected to the actuating mechanism (7), that the controller (10) controls the electric motor (6), **characterized in that**

- at least one temperature is determined by a brake temperature sensor (15) of the brake system (1), which brake temperature sensor (15) is arranged on the electric motor (6), and transmitted to the control and monitoring unit (9),
- wherein the control and monitoring unit (9) determines a time sequence of brake temperature expectation values based on the braking effect request,
- wherein the control and monitoring unit (9) further compares a temperature determined by the brake temperature sensor (15) with a temporally corresponding value of the brake temperature expectation values,
- wherein the control and monitoring unit (9) determines at least one correction factor on the basis of a specifiable deviation of the determined temperature from the corresponding value of the brake temperature expectation values,
- and wherein the control and monitoring unit (9) corrects the brake control signal by the at least one correction factor and actuates the controller (10) with the corrected brake control signal.

## Revendications

1. Système de freinage (1) comprenant au moins un frein (2), dans lequel le frein (2) comporte

- - au moins une surface de frottement (3)
- - au moins un support de plaquette (4) avec au moins une plaquette de frein 5, - un mécanisme d'actionnement (7) sur lequel le support de plaquette (4) est monté
- - un mécanisme d'actionnement (7) sur lequel le support de plaquette (4) est monté, et

- - de préférence, au moins un dispositif de réglage (8),

dans lequel le système de freinage (1) comporte une unité de commande et de surveillance (9) conçue pour recevoir une demande d'effet de freinage du côté de l'entrée et pour générer un signal de commande de frein sur la base de la demande d'effet de freinage et pour l'envoyer à un contrôleur (10) du frein (2), dans lequel le système de freinage (1) comporte au moins un capteur de température de frein (15), ce capteur de température de frein (15) est connecté de manière communicative à l'unité de commande et de surveillance (9), l'unité de commande et de surveillance (9) étant conçue pour déterminer une séquence temporelle de valeurs d'attente de température de frein sur la base de la demande d'effet de freinage, et en outre pour comparer une température déterminée par le capteur de température de frein (15) avec une valeur correspondant temporellement aux valeurs d'attente de température de frein, et de déterminer au moins un facteur de correction sur la base d'un écart prédéterminable de la température déterminée par rapport à la valeur correspondante des valeurs d'attente de la température du frein, et de corriger le signal de commande de frein par le facteur de correction au moins, et d'actionner le contrôleur (10) en utilisant le signal de commande de frein corrigé, **caractérisé en ce que** le système de freinage (1) est conçu comme un système de freinage électromécanique (1), **en ce que** le frein (2) comprend en outre au moins un moteur électrique (6) pour le déplacement spécifiable du support de plaquette (4), lequel moteur électrique (6) est en outre relié au mécanisme d'actionnement (7), **en ce que** le contrôleur (10) commande le moteur électrique (6), et **en ce que** le capteur de température de frein (15) est disposé sur le moteur électrique (6).

2. Le système de freinage (1) selon la revendication 1, **caractérisé en ce que** les valeurs d'au moins une résistance thermique et d'au moins une capacité thermique du frein (2) ainsi que les relations entre la demande d'effet de freinage, le couple de freinage et la puissance thermique sont stockées dans une unité de mémoire (13) reliée à l'unité de commande et de surveillance (9), et **en ce que** l'unité de commande et de surveillance (9) détermine les valeurs d'attente de la température du frein sur la base de ces valeurs et de ces relations.

3. Le système de freinage (1) selon la revendication 2, **caractérisé en ce qu'**une pluralité spécifiable de résistances thermiques est également stockée dans l'unité de mémoire (13), et **en ce que** les diverses résistances thermiques représentent les effets de refroidissement dépendant de la vitesse et/ou de la température ambiante.

4. Le système de freinage (1) selon l'une des revendications 1 à 3, **caractérisé en ce que** le système de freinage (1) possède au moins un capteur de température ambiante (14) pour la détermination au moins indirecte d'une température d'un environnement spécifié d'un dispositif à freiner avec le système de freinage (1), lequel capteur de température ambiante (14) est connecté à l'unité de commande et de surveillance (9).

5. Le système de freinage (1) selon l'une quelconque des revendications 1 à 4, **caractérisé en ce que** le système de freinage (1) peut comprendre au moins une unité de détermination de la vitesse de l'air ambiant et/ou un système de mesure de la vitesse (24), qui sont reliés à l'unité de commande et de surveillance (9).

6. Le système de freinage (1) selon l'une quelconque des revendications 1 à 5, **caractérisé en ce que** l'unité de commande et de surveillance (9) prend en compte un historique temporel spécifiable, en particulier un nombre spécifiable de valeurs temps-température discrètes, lors de la formation du facteur de correction.

7. Le système de freinage (1) selon l'une quelconque des revendications 2 à 6, **caractérisé en ce qu'**au moins une dimension prédéterminable, en particulier originale, de la plaquette de frein (5) et/ou de la surface de frottement (3), et/ou au moins un coefficient de frottement, en particulier original, pour la paire de plaquettes de frein (5) et de surfaces de frottement (3) est stocké dans l'unité de mémoire (13), et **en ce que** l'unité de commande et de surveillance (9) génère le signal de commande de frein en tenant compte d'au moins une dimension et/ou d'un coefficient de frottement.

8. Le système de freinage (1) selon l'une quelconque des revendications 1 à 7, **caractérisé en ce que** le mécanisme d'actionnement (7) a une entrée mécanique qui est reliée au moteur électrique (6), **en ce que** le mécanisme d'actionnement (7) a une sortie mécanique qui est reliée au support de plaquette (4), et **en ce que** le mécanisme d'actionnement (7) est conçu de manière à ce qu'un mouvement à l'entrée soit lié à un mouvement de la sortie par une relation non linéaire spécifiable.

9. Système de freinage (1) selon l'une quelconque des revendications 2 à 8, **caractérisé en ce qu'**une fonction de transfert du mécanisme d'actionnement (7) est stockée dans l'unité de mémoire (13).

10. Le système de freinage (1) selon l'une des revendications 1 à 9, **caractérisé par le fait que** le système de freinage (1) est conçu sans capteur de force.

11. Le système de freinage (1) selon l'une quelconque des revendications 1 à 10, **caractérisé en ce que** le système de freinage comprend en outre un frein de générateur électrique, et **en ce que** l'unité de commande et de surveillance (9) prend en compte un couple de freinage de générateur du frein de générateur lors de la détermination des valeurs d'attente de la température de freinage.

12. Véhicule comportant au moins un système de freinage (1) selon l'une quelconque des revendications 1 à 11.

13. Le véhicule selon la revendication 12, **caractérisé en ce que** le véhicule peut de préférence avoir au moins un capteur pour déterminer une vitesse de roue individuelle et/ou un glissement de roue, en particulier dans le cadre d'un ABS et/ou ESP du véhicule, et/ou a un capteur de pluie, **en ce que** le capteur est au moins indirectement connecté à l'unité de contrôle et de surveillance (9) du système de freinage (1), **en ce que** l'unité de contrôle et de surveillance (9) est en outre conçue pour comparer la vitesse ou le patinage des roues déterminé par le capteur avec au moins une valeur pour une attente de comportement de fonctionnement correspondant pendant un processus de freinage, et pour ajuster au moins un facteur de correction en cas d'écart spécifié.

14. Le véhicule selon l'une des revendications 12 ou 13, **caractérisé en ce que** le système de freinage (1) comporte au moins un premier et un second frein (2), **en ce que** l'unité de commande et de surveillance (9) est conçue pour déterminer des valeurs indépendantes d'attente de température de freinage pour le premier frein et le second frein dans chaque cas sur la base de la demande d'effet de freinage, et en outre pour comparer les températures déterminées indépendamment du premier et du deuxième frein dans chaque cas avec la valeur correspondante dans le temps des valeurs attendues de la température du frein, pour former des premier et deuxième facteurs de correction indépendants pour le premier et le deuxième frein dans chaque cas, et pour corriger les signaux de commande de frein du premier et du deuxième frein par le facteur de correction respectif.

15. Méthode de fonctionnement d'un système de freinage (1) comprenant au moins un frein (2), dans lequel le frein (2) comporte

  - au moins une surface de frottement (3),
  - au moins un support de plaquette (4) avec au moins une plaquette de frein (5),

- un mécanisme d'actionnement (7) sur lequel le porte-plaquette (4) est monté, et
- de préférence au moins un dispositif de réglage (8),

dans lequel le système de freinage (1) comporte une unité de commande et de surveillance (9), dans lequel une demande d'effet de freinage est reçue de l'unité de commande et de surveillance (9) du côté de l'entrée, et un signal de commande de frein est généré sur la base de la demande d'effet de freinage et transmis à un contrôleur (10) du frein (2), dans lequel le système de freinage (1) est conçu comme un système de freinage électromécanique (1), en ce que le frein (2) comprend en outre au moins un moteur électrique (6) pour le déplacement spécifique du support de plaquette (4), lequel moteur électrique (6) est en outre connecté au mécanisme d'actionnement (7), que le contrôleur (10) commande le moteur électrique (6), **caractérisé en ce que**

- au moins une température est déterminée par un capteur de température de frein (15) du système de freinage (1), lequel capteur de température de frein (15) est placé sur le moteur électrique (6), et transmise à l'unité de commande et de contrôle (9),
- l'unité de commande et de surveillance (9) détermine une séquence temporelle de valeurs d'attente de température de freinage sur la base de la demande d'effet de freinage,
- l'unité de commande et de surveillance (9) compare en outre une température déterminée par le capteur de température de frein (15) avec une valeur correspondant dans le temps aux valeurs attendues de la température de frein,
- l'unité de commande et de surveillance (9) détermine au moins un facteur de correction sur la base d'un écart spécifiable de la température déterminée par rapport à la valeur correspondante des valeurs attendues de la température du frein,
- et dans lequel l'unité de contrôle et de surveillance (9) corrige le signal de commande de frein en fonction d'au moins un facteur de correction et actionne le contrôleur (10) avec le signal de commande de frein corrigé.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009187320 A1
- US 2010131166 A1
- US 2014025271 A1
- US 2009195058 A1
- US 2007194623 A1
- US 2005077783 A1
- EP 1384638 A2